# EUROPEAN PATENT SPECIFICATION

(11) **EP 3 550 864 B1**
(45) Date of publication and mention of the grant of the patent: **28.10.2020**
(21) Application number: 19165105.8
(22) Date of filing: 26.03.2019
(51) Int. Cl.: H04W 48/18, H04W 4/48, H04W 88/06, H04W 84/12, H04W 84/18, H04W 76/14, H04W 76/36

(54) **VEHICLE-MOUNTED ELECTRONIC DEVICE FOR PERFORMING DOUBLE AUTHENTICATION**
FAHRZEUGMONTIERTE EKTRONISCHE VORRICHTUNG ZUR DOPPELTEN AUTHENTIFIZIERUNGEL
DISPOSITIF ÉLECTRONIQUE MONTÉ SUR UN VÉHICULE POUR EFFECTUER UNE DOUBLE AUTHENTIFICATION

(30) Priority: 05.04.2018 JP 2018073281
(43) Date of publication of application: 09.10.2019
(73) Proprietor: Alpine Electronics, Inc., Tokyo 145-0067 (JP)
(72) Inventor: Konda, Masatoshi, Iwaki-city, Fukushima (JP)
(74) Representative: Schmitt-Nilson Schraud Waibel Wohlfrom Patentanwälte Partnerschaft mbB

(56) References cited:
- EP-A1- 3 291 633
- US-A1- 2017 195 325

## Description

The present invention relates to an electronic device mounted on a moving body such as a vehicle, and more particularly, to wireless connection of an electronic device.

Nowadays, a multi-functional information terminal, which is represented by a smartphone or the like, is increasingly used. When such an information terminal is brought in a vehicle, the information terminal is connected to an electronic device mounted on the vehicle (hereinafter, referred to as a vehicle-mounted device). A music played in an information terminal side is output by voice from the vehicle-mounted device, or a hands-free call or the like can be performed. In addition, it becomes possible to use a function mounted in the information terminal in the vehicle-mounted device. For example, when the information terminal is associated with the vehicle-mounted device, image data of icons displayed on the screen of the information terminal is transmitted to the vehicle-mounted device, and the same icons are displayed also on the vehicle-mounted device. A user can activate and operate an application of the information terminal by selecting and operating the icon on the interface of the vehicle-mounted device.

As in the above, in order to associate the vehicle-mounted device with the information terminal, not only a line such as a USB cable is used for connection, but nowadays, wireless connection starts to be diffused in which a wireless communication technology such as Bluetooth (registered trademark) or Wi-Fi (registered trademark) is used. In this way, in a technology related to wireless connection between the vehicle-mounted device and the information terminal, when a wireless connection is performed with an information terminal and a connection request is received from another information terminal, the wireless connection is cut off from the information terminal in connection on the basis of the priority of each information terminal and then another wireless connection is performed with the other information terminal from which the request is received. In addition, when a wireless connection is possible with the information terminal having been cut off, the corresponding information terminal can be reconnected (Patent Literature 1).

Patent Literature 1: JP 2012-147146 A

US 2017/195325 A1 discloses a method of pairing a mobile user device with an automobile head unit without direct user interaction with the head unit.

EP 3 291 633 A1 discloses a method and apparatus for performing role management of short-range wireless connections.

Conventional problems will be described when a vehicle-mounted device and an information terminal are connected in a wireless manner. When a specific function of the information terminal is used in the vehicle-mounted device, first, a wireless connection is authenticated by performing a wireless connection in a wireless communication scheme like Bluetooth (registered trademark), and then switching is performed to another wireless communication scheme and data is transmitted and received in the switched communication scheme. The reason why such a double authentication scheme is adopted is to complete authentication in a short time by using a communication scheme in which device-to-device communication such as pairing is excellent, and when an actual function is executed, it improves convenience to use a communication scheme excellent in transmission and reception of a large amount of data.

However, when connection has been already established with another apparatus in a communication scheme that is necessary for first authentication, even when a connection request is transmitted to a vehicle-mounted device in order to use a function necessary for the double authentication, the first authentication is not completed due to being in connection with the other apparatus and thus the function cannot be used. In addition, in such a case, the user manually cuts off the wireless connection with the other apparatus being in connection and performs wireless connection with the information terminal. After the communication scheme is switched, when it is necessary to reconnect the cut-off wireless connection, it is very complicated. Furthermore, in the conventional vehicle-mounted device, an information terminal which requires double authentication is not considered. For example, there is also a problem that connection cannot be performed with an information terminal that requires double authentication but has a lower priority.

An object of the present invention is to provide an electronic device in which convenience of switching of a wireless connection is improved.

The invention relates to an electronic device according to the appended claims. Embodiments are disclosed in the dependent claims.

An electronic device according to an aspect of the present invention is an electronic device provided with a communication function by at least a first communication scheme and a second communication scheme that is different from the first communication scheme, the electronic device including: a connection means configured to enable a wireless connection with an apparatus in the first communication scheme or the second communication scheme; a detection means configured to detect, when the communication means receives a connection request from one apparatus in the first communication scheme, whether the connection means is in a wireless connection with another apparatus in the first communication scheme; a determination means configured to determine whether the one apparatus is an apparatus necessary to preferentially establish the wireless connection in the first communication scheme, by determining that the one apparatus requires double authentication; and a connection control means configured to control the connection means on the basis of the determination of the determination means, in which, when the one apparatus is determined as the apparatus to be preferentially wirelessly connected, the connection control means releases the wireless connection with the other apparatus in the first communication scheme, establishes the wireless connection with the one apparatus in the first communication scheme, authenticates the one apparatus and then switches the wireless connection with the one apparatus in the second communication scheme, and restarts the wireless connection with the other apparatus in the first communication scheme.

In an embodiment, when a connection state with the other apparatus is a prescribed connection state and the connection control means receives a connection request from the one apparatus, the connection with the other apparatus is not released until the prescribed connection state ends. In an embodiment, the electronic device further includes a storage means configured to store history information in relation to a previous connection history with an apparatus, in which the determination means determines whether the apparatus, which receives the connection request, is an apparatus to be preferentially wirelessly connected on the basis of the history information. In an embodiment, the history information is a connection history in the second communication scheme. In an embodiment, the history information includes identification information for identifying an apparatus having been connected when power of the electronic device is cut off, and the determination means determines whether the apparatus, which receives the connection request, is the apparatus to be preferentially wirelessly connected on the basis of the identification information when the electronic device is restarted. In an embodiment, the determination means performs a determination on whether the one apparatus is an apparatus configured to execute a function that is necessary to perform double authentication by switching the communication scheme. In an embodiment, the detection means detects whether a wireless connection is being performed with the other apparatus in a same communication scheme as that by the apparatus that has received the connection request. In an embodiment, the first communication scheme is a Bluetooth (registered trademark) communication, and the second communication scheme is a Wi-Fi (registered trademark) communication. In an embodiment, the electronic device further includes an output means configured to output data acquired from the device, in which the output means outputs data acquired in the second communication scheme from the one apparatus.

According to aspects of the present invention, when there is a connection request from an apparatus to be preferentially connected wirelessly, a wireless connection with another apparatus is released and a wireless connection with the corresponding apparatus is established. Therefore, even when wireless connections of a plurality of apparatuses compete, a wireless connection of one apparatus is reliably performed, and convenience of switching of a wireless connection is improved.

Fig. 1 is a diagram illustrating a configuration example of a communication system according to an example of the present invention.
Fig. 2 is a block diagram illustrating a typical configuration of a vehicle-mounted device and an information terminal according to an example of the present invention.
Fig. 3 is a diagram illustrating a functional configuration example of a connection control program according to an example of the present invention.
Fig. 4 is a flowchart describing an operation when a connection control program according to an example of the present invention is executed.
Figs. 5A to 5D are diagrams illustrating concrete examples for describing present examples.

Hereinafter, detailed descriptions are provided with reference to the accompanying drawings on the basis of embodied examples in an electronic device according to the present invention. In addition, in the present embodiments, descriptions will be provided about a case where when an information terminal having a wireless communication function is introduced in a cabin of a vehicle on which a vehicle-mounted device is mounted, the vehicle-mounted device and the information terminal can be connected wirelessly. The vehicle-mounted device according to an embodiment of the present invention is a computer device and can be integrally provided with, for example, a navigation function, a function of playing audio/video data, a function of receiving television/radio broadcasting, a function of executing application software, or the like. In addition, the vehicle-mounted device according to an embodiment of the present invention is provided with a function for connecting with the information terminal such as a smartphone, a tablet terminal, or a laptop computer, and can use a communication function included in the information terminal, acquire various kinds of data such as music data or image data held by the information terminal so as to use a function of the information terminal, and output the acquired data from the vehicle-mounted device.

The information terminal according to an embodiment of the present invention can be a mobile information terminal which is for example, a smartphone, a tablet-type terminal, or the like, and is integrally provided with, for example, a call function, a navigation function, a function of playing audio/video data, a function of receiving television/radio broadcasting, a function of executing application software, or the like. In addition, it is also possible to be connected in a wired and/or wireless manner with an electronic device. For the wireless connection, Bluetooth (registered trademark: hereinafter referred to as BT connection), Wi-Fi (registered trademark: hereinafter, referred to as WF connection), or the like can be used. In the case of connection using the BT connection, pairing is performed in advance between the vehicle-mounted device and the information terminal.

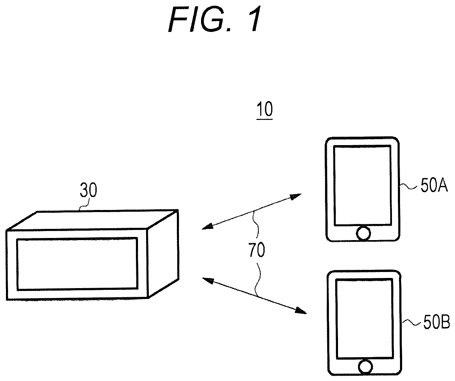

Fig. 1 is a diagram illustrating a configuration example of a communication system according to an example of the present invention. A communication system 10 includes a vehicle-mounted device 30 and a plurality of information terminals (an information terminal 50A and an information terminal 50B). The vehicle-mounted device 30 enables bidirectional data communication between the information terminal 50A and/or the information terminal 50B through a connection means 70. The connection means 70 can perform, for example, wireless communication such as a BT connection or WF connection. In the description about the present example, communication by a wireless module such as an audio profile (AVP) or a profile (HFP) that regulates hands-free call function is considered as performing data transmission and reception in a wireless communication scheme by the BT connection. In addition, the connection means 70 possibly performs data transmission and reception in a wireless communication scheme by the WF connection. Furthermore, the information terminal is provided with a function of a voice call or packet communication through a public wireless line such as 3G, 4G, or LTE.

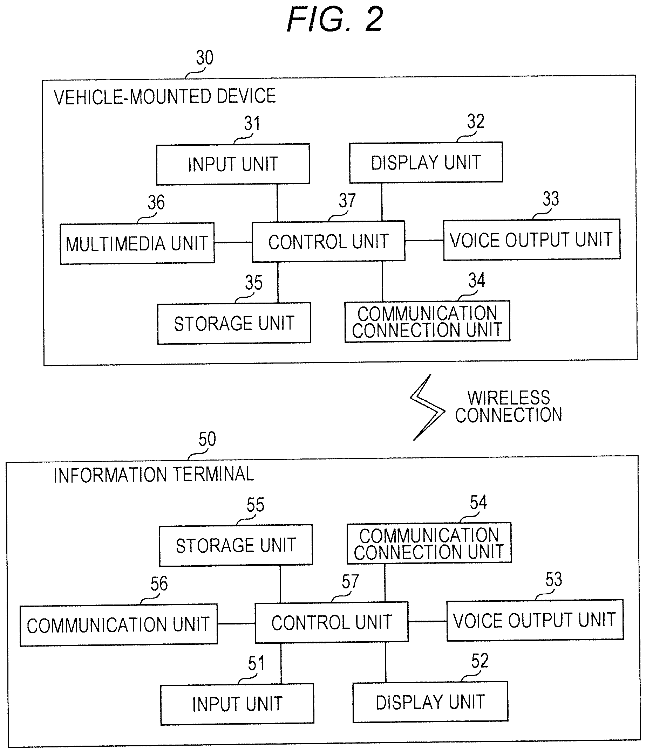

Next, Fig. 2 is a block diagram illustrating a typical configuration of a vehicle-mounted device and an information terminal according to an example of the present invention. First, the vehicle-mounted device 30 is configured to include an input unit 31, a display unit 32, a voice output unit 33, a communication connection unit 34, a storage unit 35, a multimedia unit 36, and a control unit 37. The input unit 31 receives an instruction from a user. The input unit 31 includes a touch panel or an input key device, a voice input, or the like. The display unit 32 displays various kinds of information in relation to applications through which various kinds of media play information or navigation information are executed. The voice output unit 33 outputs various kinds of information through a voice in the same way as the display unit 32.

The communication connection unit 34 connects with an information terminal 50 in a wired or wireless manner. In one embodiment, the communication connection unit 34 includes, for example, a communication module configured to perform a BT connection for an AVP or HFP, and a communication module for a WF connection, and can switch between the BT connection and the WF connection on the basis of a control signal from the control unit 37. In the present example, it is assumed that the information terminal 50, which establishes a wireless connection through the BT connection, is authenticated first, and then switching is performed to the WF connection. This switching from the BT connection to the WF connection may be performed automatically, or for example, it may also be induced to perform the WF connection to the information terminal by noticing completion of the authentication by the BT connection. In addition, the communication connection unit 34 preferably has an automatic connection function, and when the information terminal 50 registered in advance through pairing or the like is detected within a prescribed range, a BT connection with the detected information terminal 50 is automatically performed.

In addition, in the BT connection, for example, when the vehicle-mounted device 30 is provided only with the HFP profile, a one-to-one wireless connection is performed with the information terminal 50 and a connection is not possibly performed with another information terminal 50. However, when a plurality of profiles are supported, BT connections can be established with the plurality of information terminals 50. Here, a case to which the present invention is applied is that when the information terminal 50 having a specific function is desired to be used, a connection is already performed by the corresponding profile. The case is not limited to the number of profiles provided in the vehicle-mounted device 30.

The storage unit 35 can store an application software or program executed by the vehicle-mounted device 30, or content data such as road map data, or music or video. In addition, the storage unit 35 stores each identified and pairing-performed information terminal 50, and this is used at the time of automatic connection of the information terminal 50. In addition, the storage unit 35 can store, as connection history information, which application is activated when the information terminal 50 has been previously connected, and which kind of a communication module has performed the connection, together with the identification information on the information terminal 50 which has been used in the past. In one preferable example, every time the wireless connection is cut off, the history information is updated. For example, there is a case or the like where the BT connection of the information terminal 50 is manually cut off by the user, where power of the information terminal is cut off, or where power of the vehicle-mounted device itself is cut off by turning ACC off.

The multimedia unit 36 receives audio data or video data stored in a CD, a DVD, a Blu-ray disc, a memory medium, or the like, and television broadcasting or radio broadcasting, and outputs the received one through the display unit 32 or the voice output unit 33. In addition, the multimedia unit 36 performs a playing request to the connected information terminal 50, receives played media data from the information terminal 50, and outputs the received data from the display unit 32 or the voice output unit 33. The control unit 37 includes a micro controller, a central processor, or the like, and performs prescribed processing on the basis of a control program stored in the storage unit 35. The control program according to the present embodiment includes a connection control program 100.

Then, the information terminal 50 is configured to include an input unit 51 configured to receive an input from a user, a display unit 52 configured to display various kinds of images or information on a display, a voice output unit 53 configured to output a voice, a communication connection unit 54 configured to implement a connection with the vehicle-mounted device 30 by the BT connection or the WF connection, a storage unit 55 configured to store an application, various kinds of programs, or the like held in the information terminal 50, a communication unit 56 configured to enable data communication with an external network, a call with a phone or a connection to the Internet through a public wireless circuit network, or the like, and a control unit 57 configured to execute various controls of the information terminal 50 and a program stored in the storage unit 55.

The storage unit 55 stores various kinds of applications and programs. For example, an application for playing audio and video data, an application for executing a game, a program for performing a voice call, a program for browsing information on the Internet through the communication unit 56, and the like are stored. In addition, an extension program is included which decodes a command signal transmitted from the vehicle-mounted device 30 through the BT connection and executes an application by the command signal. Furthermore, for the BT connection corresponding to the information terminal 50, one or a plurality of profiles are stored and the vehicle-mounted device 30 and the information terminal 50 can be paired by the profile commonly included therein.

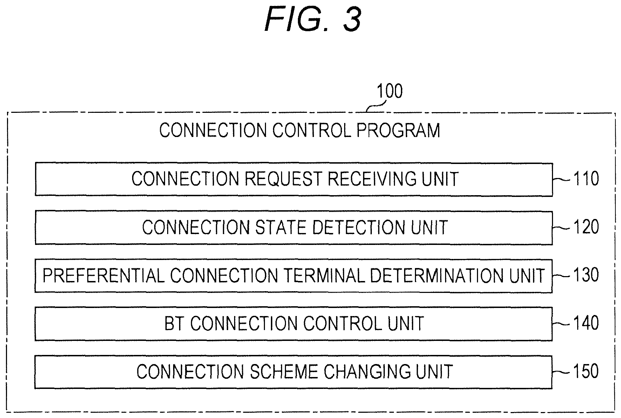

In the present embodiment, the control unit 37 in the vehicle-mounted device 30 executes the connection control program 100, when receiving a connection request through the communication connection unit 34 from the information terminal 50. Fig. 3 is a diagram illustrating a functional configuration example of the connection control program 100 according to an example of the present invention. The connection control program 100 is provided with a connection request receiving unit 110, a connection state detection unit 120, a preferential connection terminal determination unit 130, a BT connection control unit 140, and a connection scheme changing unit 150.

First, the connection request receiving unit 110 acquires the connection request from the information terminal trough the communication connection unit 34. A user side receives the connection request by detecting that an operation for connection with the vehicle-mounted device is completed. For example, the reception is performed in a way that there has been the connection request from a vehicle-mounted device side in response to that the user operates the information terminal to make the BT connection on. Alternatively, when the vehicle-mounted device side has an automatic connection function, detecting a nearby information terminal that can be connected at a startup may be handled as the connection request.

In response to the detecting of the connection request by the connection request receiving unit 110, the connection state detection unit 120 detects whether there is an apparatus that performs another wireless connection at that time. For example, through the communication connection unit 34, information on which apparatus is in connection and which application is being executed is also detected. Thereby, it can be possible to perform determination on whether there is not a problem to cut off the wireless connection with the other apparatus at once.

When the information terminal that has requested the connection meets a prescribed condition, the preferential connection terminal determination unit 130 determines that the information terminal is necessary to be preferentially connected. In addition, such an information terminal is referred to as a preferential connection terminal. The prescribed condition is whether the information terminal executes a specific function requiring double authentication by a change in the communication scheme, and in the present example, it is determined whether the information terminal is required to switch the communication scheme from the BT connection into the WF connection. In an embodiment, the determination is performed by using past connection history information (WF connection) with the information terminal, which is stored in the storage unit 35. For example, it is detected how the connection information was used in the past on the basis of identification information on the information terminal that requests the connection at the current time. In addition, when there was a use case where the information terminal met the prescribed condition in the past, the information terminal is determined as a preferential connection terminal.

The connection history information is, for example, information terminal identification information, usage information, finally connected connection date and time, and the like. In addition, when an information terminal, which is not in the connection history information, is newly connected, a record of the connection history information increases, and when an information terminal, which was connected in the past, is reconnected, use information and connection date and time may be overwritten.

In addition, in an embodiment, a preferential connection terminal may be determined only from a connection use history before the power of the vehicle-mounted device is turned off by using information on the connection date and time in the connection history information. In this way, for example, when the power of the vehicle-mounted device is temporarily turned off and immediately is started, it can reduce a burden of processing only by handling the latest history, and improve a processing speed.

The BT connection control unit 140 controls the communication connection unit 34 so as to release the BT connection from the other apparatus in the wireless connection, and to establish a BT connection with the preferential connection terminal. Next, the connection scheme changing unit 150 controls the communication connection unit 34 so as to switch the wireless communication scheme with the information terminal to a WF connection, when authentication is completed for the information terminal that is preferentially connected. In addition, the function of the connection scheme changing unit 150 may be held by the BT connection control unit 140. Furthermore, in the present example, although the switching is performed from the BT connection to the WF connection, according to an embodiment, it may also be changed to another wireless communication scheme.

Then, in response to the switching of the communication scheme by the connection scheme changing unit 150, the BT connection control unit 140 restarts communication through the BT connection with the other apparatus that has released the BT connection before. In an embodiment, when the connection is released, the identification information on the apparatus is temporarily stored in the storage unit 35, and a connection is automatically restarted in a step in which the BT connection is possible.

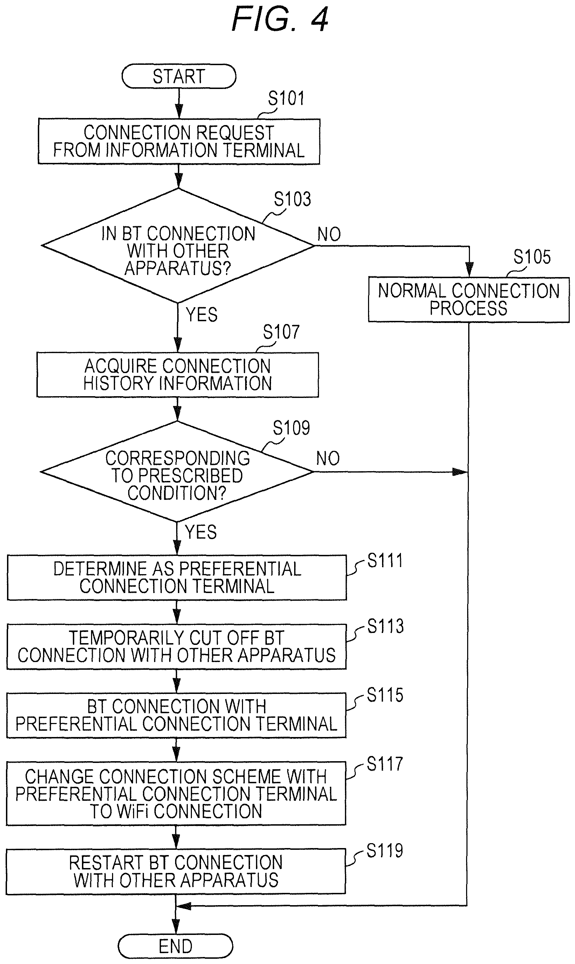

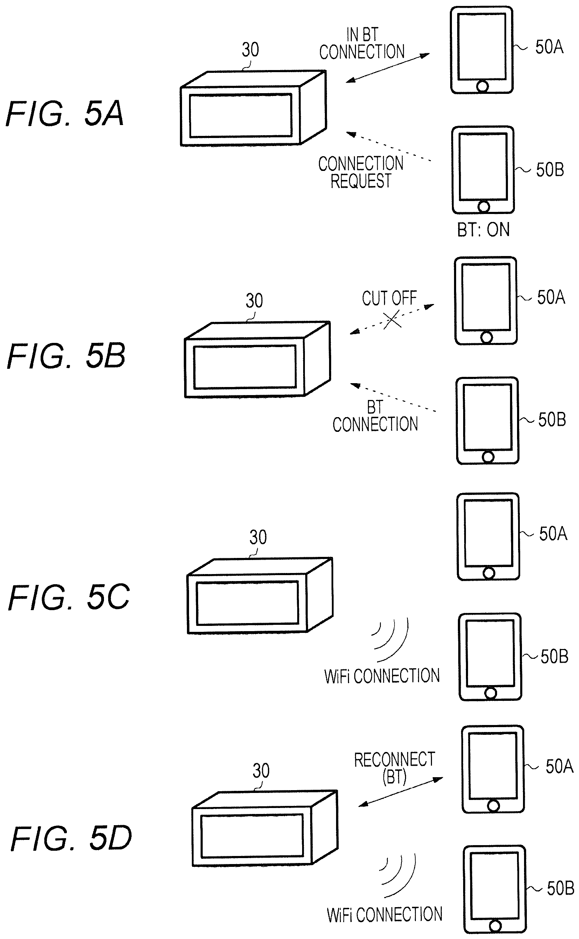

Next, for an operation at the time of executing the connection control program 100 according to an embodiment of the present invention, descriptions are provided with reference to a flowchart of Fig. 4 and detailed examples of Figs. 5A to 5D and 6. First, the vehicle-mounted device 30 detects whether there is a connection request from an information terminal through the communication connection unit 34 by the connection request receiving unit 110 (S101). In the present example, like the information terminal 50B of Fig. 5A, the connection request is received when an operation for making the BT connection on is performed in an information terminal side. In addition, in response to the presence of the connection request, the connection state detection unit 120 detects whether the vehicle-mounted device 30 has already performed a wireless connection with another apparatus by the BT connection (S103). Here, when the BT connection with the other apparatus has not been performed, the conventional connection processing is performed, and the processing is ended (S105). As illustrated in Fig. 5A, when the BT connection has already been performed with the information terminal 50A that is the other apparatus, a next step proceeds.

Next, it is determined whether the information terminal that has requested the connection is a preferential connection terminal. First, the connection history information from the storage unit 35 is acquired (S107). On the basis of identification information on the information terminal that has requested the connection from the acquired connection history information, it is searched how the information terminal has been used in the past and it is determined whether the information terminal meets a prescribed condition (S109). When the information terminal is determined to meet the prescribed condition, the information terminal is determined as the preferential connection terminal (S111). Here, when the information terminal is determined not to meet the prescribed condition, the processing ends.

Next, for the BT connection with the preferential connection terminal, the BT connection control unit 140 controls the communication connection unit 34 to temporarily cut off the BT connection with the other apparatus in connection (S113). In the present example, at this time, the storage unit 35 stores the identification information on the apparatus of which the connection is cut off. In addition, the BT connection control unit 140 controls the communication connection unit 34 to establish the BT connection with the preferential connection terminal (S115). Thereby, as in Fig. 5B, the BT connection is performed only with the information terminal 50B that is the preferential connection terminal. In addition, when the connection with the information terminal 50B is completed, the vehicle-mounted device 30 performs authentication on the information terminal 50B.

Next, in response to the completion of the authentication for the information terminal 50B by the vehicle-mounted device 30, the connection scheme changing unit 150 controls the communication connection unit 34 to switch the connection scheme with the preferential connection terminal into the WF connection (S117). Thereby, as in Fig. 5C, in a state in which the connection with the information terminal 50A is cut off, it becomes a state in which a wireless connection with the information terminal 50B is performed through the WF connection.

Furthermore, in response to the switching of the communication scheme, the BT connection control unit 140 controls the communication connection unit 34 to detect the previously cut off apparatus from the storage unit 35, and restarts a wireless connection through the BT connection (S119). Thereby, as in Fig. 5D, it becomes a state in which the BT connection is performed with the information terminal 50A, and the WF connection with the information terminal 50B is performed together. Then, the processing ends.

According to the present embodiments as described above, when a connection is performed with an information terminal that requires double authentication and when a wireless connection has already performed with another apparatus, the connection with the other apparatus is cut off and the connection with the information terminal that requires the double authentication is preferentially performed. Then, the connection with the other apparatus having been cut off is restarted, when the communication scheme is switched, and the information terminal that requires the double authentication can become surely connected. In addition, the connection with the other apparatus can also be continuously performed.

Next, a modified example of the present example will be described. As the modified example, when the connection state detection unit 120 performs a connection with the other apparatus, the BT connection control unit 140 detects how the other apparatus is currently used, and determines, from the detection result, whether the connection with the other apparatus is possibly cut off. As a criterion for the determination, for example, when the information terminal only transmits information such as a phone number or facility information, or the information terminal is in a call waiting state without using hands free or the like, it can be determined that the cut off is possible. Since the cut off is not possible when the information terminal is busy by using hands free, it is preferable to appropriately set in advance such that the cut off is not performed until the use is transitioned to the call waiting state. In addition, for a function continuously used such as music playing, if the end of the music can be detected, the cut off may be waited until that timing and then performed. Furthermore, a warning and a reason for a temporary cut-off of the connection are output together on a screen or through a voice, etc., and then an approval may be obtained from a user.

The BT connection control unit 140 is allowed to perform the same operation as that in the example, when the cut off is determined to be possible. Thereby, a situation in which the connection is suddenly cut off during a phone call or listening music or the like can be removed.

In addition, in the present example, an information terminal in which the BT connection is set on is detected, and automatically the above-described processes are performed to establish a wireless connection, but according to an embodiment, a selection screen about whether such a function is to be executed is shown to a user through the display unit 32 before the connection is established, and a selection may be performed on the screen. Thereby, a function that requires double authentication is normally connected and used in the information terminal. However, when another function (for example, music playing, etc.) is desired to be executed or the like, it can be prevented from automatically establishing a connection so as to use the function that requires the double authentication.

In the above example, although switching from the BT connection to the WF connection is exemplified, the present invention can be applied to switching of other communication schemes. Accordingly, the communication scheme itself can be changed according to an embodiment.

Although preferred embodiments of the present invention have been described in detail, the present invention is not limited to such specific embodiments, and various changes and alterations can be made herein without departing from the scope of the invention as defined by the appended claims.

### Reference Signs List

- 10: COMMUNICATION SYSTEM
- 30: VEHICLE-MOUNTED DEVICE
- 50A, 50B: INFORMATION TERMINAL
- 70: CONNECTION MEANS

## Claims

1. An electronic device (30) provided with a communication function by at least a first communication scheme and a second communication scheme that is different from the first communication scheme, the electronic device (30) comprising:
a connection means (70) configured to enable a wireless connection with an apparatus in the first communication scheme or the second communication scheme;
a detection means (120) configured to detect, when the connection means (70) receives a connection request from one apparatus in the first communication scheme, whether the connection means (70) is in a wireless connection with another apparatus in the first communication scheme;
a determination means (130) configured to determine whether the one apparatus is an apparatus necessary to preferentially establish the wireless connection in the first communication scheme by determining that the one apparatus requires double authentication; and
a connection control means (140) configured to control the connection means (70) on the basis of the determination of the determination means (130),
wherein, when the one apparatus is determined as the apparatus to be preferentially wirelessly connected, the connection control means (140) is further configured to release the wireless connection with the other apparatus in the first communication scheme, establish the wireless connection with the one apparatus in the first communication scheme and authenticate the one apparatus **characterized in that** the connection control means is further configured to subsequently switch the wireless connection with the one apparatus in the second communication scheme, and restart the wireless connection with the other apparatus in the first communication scheme.

2. The electronic device (30) according to claim 1, **characterized in that**, when a connection state with the other apparatus is a prescribed connection state and the connection control means (140) receives a connection request from the one apparatus, the connection with the other apparatus is not released until the prescribed connection state ends.

3. The electronic device (30) according to claim 1 or 2, further comprising:
a storage means (35) configured to store history information in relation to a previous connection history with an apparatus,
wherein the determination means (130) is further configured to determine whether the apparatus, which receives the connection request, is an apparatus to be preferentially wirelessly connected on the basis of the history information.

4. The electronic device (30) according to claim 3, **characterized in that** the history information is a connection history in the second communication scheme.

5. The electronic device (30) according to claim 3 or 4, **characterized in that** the history information includes identification information for identifying an apparatus having been connected when power of the electronic device (30) is cut off, and
the determination means (130) is further configured to determine whether the apparatus, which receives the connection request, is the apparatus to be preferentially wirelessly connected on the basis of the identification information when the electronic device is restarted.

6. The electronic device (30) according to one of claims 1-5, **characterized in that** the determination means (130) is further configured to perform a determination on whether the one apparatus is an apparatus configured to execute a function that is necessary to perform double authentication by switching the communication scheme.

7. The electronic device (30) according to one of claims 1-6, **characterized in that** the detection means (120) is further configured to detect whether a wireless connection is being performed with the other apparatus in a same communication scheme as that by the apparatus that has received the connection request.

8. The electronic device (30) according to one of claims 1-7, **characterized in that** the first communication scheme is a Bluetooth (registered trademark) communication, and the second communication scheme is a Wi-Fi (registered trademark) communication.

9. The electronic device (30) according to one of claims 1-8, further comprising:
an output means (32, 33) configured to output data acquired from the apparatus,
wherein the output means (32, 33) is further configured to output data acquired in the second communication scheme from the one apparatus.

10. The electronic device (30) according to one of claims 1-9, **characterized in that** the electronic device (30) is a vehicle-mounted device.

## Patentansprüche

1. Elektronische Vorrichtung (30), die versehen ist mit einer Kommunikationsfunktion durch mindestens ein erstes Kommunikationsschema und ein zweites Kommunikationsschema, das sich von dem ersten Kommunikationsschema unterscheidet, wobei die elektronische Vorrichtung (30) umfasst:
eine Verbindungseinrichtung (70), die dazu ausgelegt ist, eine drahtlose Verbindung mit einem Gerät in dem ersten Kommunikationsschema oder dem zweiten Kommunikationsschema zu ermöglichen;
eine Detektionseinrichtung (120), die dazu ausgelegt ist, zu detektieren, wenn die Verbindungseinrichtung (70) eine Verbindungsanfrage von einem Gerät in dem ersten Kommunikationsschema empfängt, ob die Verbindungseinrichtung (70) mit einem anderen Gerät in dem ersten Kommunikationsschema in drahtloser Verbindung ist;
eine Bestimmungseinrichtung (130), die dazu ausgelegt ist, zu bestimmen, ob das eine Gerät ein Gerät ist, das vorzugsweise die drahtlose Verbindung in dem ersten Kommunikationsschema herstellen soll, durch Bestimmen, dass das eine Gerät doppelte Authentifizierung erfordert; und
eine Verbindungssteuereinrichtung (140), die dazu ausgelegt ist, die Verbindungseinrichtung (70) auf Grundlage der Bestimmung der Bestimmungseinheit (130) zu steuern,
wobei, wenn das eine Gerät als das Gerät bestimmt wird, das vorzugsweise drahtlos verbunden werden soll, die Verbindungssteuereinheit (140) ferner dazu ausgelegt ist, die drahtlose Verbindung mit dem anderen Gerät in dem ersten Kommunikationsschema zu lösen, die drahtlose Verbindung mit dem einen Gerät in dem ersten Kommunikationsschema herzustellen und das eine Gerät zu authentifizieren,
**dadurch gekennzeichnet, dass** die Verbindungssteuereinrichtung (140) ferner dazu ausgelegt ist, anschließend die drahtlose Verbindung mit dem einen Gerät in dem zweiten Kommunikationsschema zu wechseln und die drahtlose Verbindung mit dem anderen Gerät in dem ersten Kommunikationsschema neu zu starten.

2. Elektronische Vorrichtung (30) nach Anspruch 1, **dadurch gekennzeichnet, dass**, wenn ein Verbindungszustand mit dem anderen Gerät ein vorgegebener Verbindungszustand ist und die Verbindungssteuereinrichtung (140) eine Verbindungsanfrage von dem einen Gerät empfängt, die Verbindung mit dem anderen Gerät nicht gelöst wird, bis der vorgegebene Verbindungszustand endet.

3. Elektronische Vorrichtung (30) nach Anspruch 1 oder 2, ferner umfassend:
eine Speichereinrichtung (35), die dazu ausgelegt ist, Verlaufsinformation in Bezug auf einen vorhergehenden Verbindungsverlauf mit einem Gerät zu speichern,
wobei die Bestimmungseinrichtung (130) ferner dazu ausgelegt ist, auf Grundlage der Verlaufsinformation zu bestimmen, ob das Gerät, das die Verbindungsanfrage empfängt, ein Gerät ist, das vorzugsweise drahtlos verbunden werden soll.

4. Elektronische Vorrichtung (30) nach Anspruch 3, **dadurch gekennzeichnet, dass** die Verlaufsinformation ein Verbindungsverlauf in dem zweiten Kommunikationsschema ist.

5. Elektronische Vorrichtung (30) nach Anspruch 3 oder 4, **dadurch gekennzeichnet, dass** die Verlaufsinformation Identifikationsinformation zum Identifizieren, dass ein Gerät verbunden war, wenn die Stromversorgung der elektronischen Vorrichtung (30) unterbrochen wird, umfasst, und
die Bestimmungseinrichtung (130) ferner dazu ausgelegt ist, auf Grundlage der Identifikationsinformation zu bestimmen, ob das Gerät, das die Verbindungsanfrage empfängt, das Gerät ist, das vorzugsweise drahtlos verbunden werden soll, wenn die elektronische Vorrichtung neu gestartet wird.

6. Elektronische Vorrichtung (30) nach einem der Ansprüche 1-5, **dadurch gekennzeichnet, dass** die Bestimmungseinrichtung (130) ferner dazu ausgelegt ist, eine Bestimmung durchzuführen, ob das eine Gerät ein Gerät ist, das dazu ausgelegt ist, eine Funktion auszuführen, die notwendig ist, um doppelte Authentifizierung durchzuführen durch Wechseln des Kommunikationsschemas.

7. Elektronische Vorrichtung (30) nach einem der Ansprüche 1-6, **dadurch gekennzeichnet, dass** die Detektionseinrichtung (120) ferner dazu ausgelegt ist, zu detektieren, ob eine drahtlose Verbindung mit dem anderen Gerät in einem gleichen Kommunikationsschema durchgeführt wird wie demjenigen von dem Gerät, das die Verbindungsanfrage empfangen hat.

8. Elektronische Vorrichtung (30) nach einem der Ansprüche 1-7, **dadurch gekennzeichnet, dass** das erste Kommunikationsschema eine Bluetooth(eingetragene Marke)-Kommunikation ist und das zweite Kommunikationsschema eine Wi-Fi(eingetragene Marke)-Kommunikation ist.

9. Elektronische Vorrichtung (30) nach einem der Ansprüche 1-8, ferner umfassend:
eine Ausgabeeinrichtung (32, 33), die dazu ausgelegt ist, von dem Gerät bezogene Daten auszugeben,
wobei die Ausgabeeinrichtung (32, 33) ferner dazu ausgelegt ist, in dem zweiten Kommunikationsschema von dem einen Gerät bezogene Daten auszugeben.

10. Elektronische Vorrichtung (30) nach einem der Ansprüche 1-9, **dadurch gekennzeichnet, dass** die elektronische Vorrichtung (30) eine fahrzeugmontierte Vorrichtung ist.

## Revendications

1. Dispositif électronique (30) qui est équipé d'une fonction de communication par le biais d'au moins un premier schéma de communication et d'un deuxième schéma de communication qui est différent du premier schéma de communication, le dispositif électronique (30) comprenant :
un moyen de connexion (70) qui est configuré pour assurer une communication sans fil avec un appareil dans le premier schéma de communication ou dans le deuxième schéma de communication ;
un moyen de détection (120) qui est configuré pour détecter, lorsque le moyen de connexion (70) reçoit une demande de connexion à partir d'un appareil dans le premier schéma de communication, le fait de savoir si le moyen de connexion (70) est mis en connexion sans fil avec un autre appareil dans le premier schéma de communication ;
un moyen de détermination (130) qui est configuré pour déterminer le fait de savoir si ledit premier appareil représente un appareil qui est nécessaire pour établir à titre préférentiel la connexion sans fil dans le premier schéma de communication en déterminant le fait que ledit premier appareil requiert une double authentification ; et
un moyen de commande de connexion (140) qui est configuré pour commander le moyen de connexion (70) sur la base de la détermination du moyen de détermination (130) ;
dans lequel, lorsque ledit premier appareil est déterminé comme étant l'appareil qui doit être connecté sans fil à titre préférentiel, le moyen de commande de connexion (140) est en outre configuré pour libérer la connexion sans fil avec l'autre appareil dans le premier schéma de communication, pour établir la connexion sans fil avec ledit premier appareil dans le premier schéma de communication et pour authentifier ledit premier appareil, **caractérisé en ce que** le moyen de commande de connexion (140) est en outre configuré pour commuter par la suite la connexion sans fil avec ledit premier appareil dans le deuxième schéma de communication et pour redémarrer la connexion sans fil avec l'autre appareil dans le premier schéma de communication.

2. Dispositif électronique (30) selon la revendication 1, **caractérisé en ce que**, lorsqu'un état de connexion avec l'autre appareil représente un état de connexion prescrit et lorsque le moyen de commande de connexion (140) reçoit une demande de connexion à partir dudit premier appareil, la connexion avec l'autre appareil n'est pas libérée tant que l'état de connexion prescrit n'est pas terminé.

3. Dispositif électronique (30) selon la revendication 1 ou 2, comprenant en outre :
un moyen de mise en mémoire (35) qui est configuré pour mettre en mémoire des informations concernant l'historique en lien avec un historique de connexions précédentes avec un appareil ;
dans lequel le moyen de détermination (130) est en outre configuré pour déterminer le fait de savoir si l'appareil, qui reçoit la demande de connexion, représente un appareil qui doit être connecté sans fil à titre préférentiel sur la base des informations concernant l'historique.

4. Dispositif électronique (30) selon la revendication 3, **caractérisé en ce que** les informations concernant l'historique représentent un historique de connexion dans le deuxième schéma de communication.

5. Dispositif électronique (30) selon la revendication 3 ou 4, **caractérisé en ce que** les informations concernant l'historique englobent des informations d'identification qui sont destinées à l'identification d'un appareil qui a été connecté lorsque l'alimentation du dispositif électronique (30) est mise hors circuit ; et
le moyen de détermination (130) est en outre configuré pour déterminer le fait de savoir si l'appareil, qui reçoit la demande de connexion, représente l'appareil qui doit être connecté sans fil à titre préférentiel sur la base des informations d'identification au cours du redémarrage du dispositif électronique.

6. Dispositif électronique (30) selon l'une quelconque des revendications 1 à 5, **caractérisé en ce que** le moyen de détermination (130) est en outre configuré pour mettre en oeuvre une détermination quant au fait de savoir si ledit premier appareil représente un appareil qui est configuré pour exécuter une fonction qui est nécessaire pour la mise en oeuvre d'une double authentification par le biais d'une commutation du schéma de communication.

7. Dispositif électronique (30) selon l'une quelconque des revendications 1 à 6, **caractérisé en ce que** le moyen de détection (120) est en outre configuré pour détecter le fait de savoir si une connexion sans fil est en train d'être mise en oeuvre avec l'autre appareil dans un schéma de communication identique à celui qui est mis en oeuvre par l'appareil qui a reçu la demande de connexion.

8. Dispositif électronique (30) selon l'une quelconque des revendications 1 à 7, **caractérisé en ce que** le premier schéma de communication représente une communication Bluetooth (marque commerciale déposée) et le deuxième schéma de communication représente une communication Wi-Fi (marque commerciale déposée).

9. Dispositif électronique (30) selon l'une quelconque des revendications 1 à 8, qui comprend en outre :
un moyen de sortie (32, 33) qui est configuré pour la sortie de données acquises à partir de l'appareil ;
dans lequel le moyen de sortie (32, 33) est en outre configuré pour la sortie de données acquises dans le deuxième schéma de communication à partir dudit premier appareil.

10. Dispositif électronique (30) selon l'une quelconque des revendications 1 à 9, **caractérisé en ce que** le dispositif électronique (30) est un dispositif monté à bord d'un véhicule.
